# EUROPÄISCHE PATENTSCHRIFT

(11) **EP 4 000 980 B1**
(45) Veröffentlichungstag und Bekanntmachung des Hinweises auf die Patenterteilung: **31.05.2023**
(21) Anmeldenummer: 20207088.4
(22) Anmeldetag: 12.11.2020
(51) Int. Cl.: B60K 15/03

(54) **DRUCKSENSORAUFNAHME**
PRESSURE SENSOR RECEPTACLE
LOGEMENT DE CAPTEUR DE PRESSION

(43) Veröffentlichungstag der Anmeldung: 25.05.2022
(73) Patentinhaber: Magna Energy Storage Systems GesmbH, 8261 Sinabelkirchen (AT)
(72) Erfinder: KULMER, Karl-Heinz, 8200 Gleisdorf (AT); FUCHS, Stefan, 8141 Graz (AT)
(74) Vertreter: Zangger, Bernd

(56) Entgegenhaltungen:
- DE-A1- 4 423 095
- DE-C2- 4 423 095
- DE-U1- 8 433 084
- GB-A- 2 330 120
- JP-A- H04 325 316

## Beschreibung

### Gebiet der Erfindung

Die vorliegende Erfindung betrifft eine Drucksensoraufnahme, zur Befestigung eines Drucksensors an einem Kraftfahrzeugtank und eine Tankvorrichtung, umfassend eine solche Drucksensoraufnahme.

### Stand der Technik

Es ist bekannt, dass Drucksensoren zur Erfassung des Drucks in einem Kraftfahrzeugtank in den Tank eingebaut werden können. Zur Befestigung von Drucksensoren können Drucksensoraufnahmen verwendet werden, die am Tank, insbesondere an einer Tankwand, befestigt werden können und die andererseits die Aufnahme und Befestigung des Drucksensors in oder an der Drucksensoraufnahme ermöglichen.

Insbesondere für Metalltanks ist die Herstellung und Befestigung von Drucksensoraufnahmen üblicherweise aufwändig und teuer. Drucksensoraufnahmen können beispielsweise exakt gefräst werden und dann mittels Schweiß- oder Lötverfahren an die metallische Tankwand gefügt werden. Dies ist vor allem bei der Großserienfertigung zeitaufwändig und teuer.

Aus der DE 44 23 095 A1 ist ein in eine Öffnung eines Kraftstofftanks einsetzbarer Tankeinsatz bekannt, welcher mittels eines die Öffnung verschließenden Halters eine Kraftstoff-Fördervorrichtung und/oder einen Füllstandssensor trägt und mit einem Drucksensorversehen ist, wobei der Drucksensor in einer Sensorkammer des Halters angeordnet ist.

Die DE 84 33 084 U1 offenbart ein Belüftungsventil, insbesondere für Dämpfe bei Kraftstoffbehältern von Kraftfahrzeugen, mit einem Bajonettverschluss, bestehend aus mindestens drei am äußeren Umfang der in den Behälter einzusetzenden Filterwand vorgesehenen Nasen.

### Zusammenfassung der Erfindung

Es ist eine Aufgabe der Erfindung, eine Drucksensoraufnahme, zur Befestigung eines Drucksensors an einem Kraftfahrzeugtank, anzugeben, die einfach hergestellt und befestigt werden kann. Eine weitere Aufgabe ist es, eine kostengünstig herstellbare Tankvorrichtung anzugeben mit einer Drucksensoraufnahme.

Die Lösung der Aufgabe erfolgt durch eine Drucksensoraufnahme, zur Befestigung eines Drucksensors an einem Kraftfahrzeugtank, mit den Merkmalen gemäß Anspruch 1.

Die Drucksensoraufnahme umfasst einen zylindrischen Aufnahmekörper und einen Verriegelungskörper, wobei ein erstes axiales Ende des Aufnahmekörpers einen Befestigungsabschnitt des Aufnahmekörpers bildet, wobei der Befestigungsabschnitt dazu ausgebildet ist, durch eine Öffnung des Kraftfahrzeugtanks gesteckt zu werden, bis eine den Befestigungsabschnitt begrenzende erste Auflagefläche des Aufnahmekörpers am Rand der Öffnung anliegt, wobei der Verriegelungskörper auf den Befestigungsabschnitt des Aufnahmekörpers aufbringbar und am Befestigungsabschnitt verriegelbar ist, sodass eine zweite Auflagefläche des verriegelten Verriegelungskörpers an der gegenüberliegenden Seite des Randes der Öffnung anliegt, so dass die Drucksensoraufnahme durch den Aufnahmekörper einerseits und den Verriegelungskörper andererseits am Rand der Öffnung geklemmt ist.

Erfindungsgemäß ist eine Drucksensoraufnahme an einem Kraftfahrzeugtank, beispielsweise an einem Kraftstofftank oder auch an einem Ausgleichsbehälter oder einem Einfüllrohr des Tanks oder Behälters, mit Hilfe eines Verriegelungskörpers als Gegenelement zu einem Aufnahmekörper der Drucksensoraufnahme befestigbar. Der Aufnahmekörper kann von einer Seite her, insbesondere von der Außenseite des Tanks, Behälters oder Rohres her, in eine Öffnung des Tanks, Behälters oder Rohres teilweise eingeführt werden und an der gegenüberliegenden Seite des Tanks, insbesondere an der Innenseite des Tanks, mit dem Verriegelungskörper am Tank, insbesondere der Tankwand, befestigt werden. Der Verriegelungskörper wird dazu auf den Befestigungsabschnitt des Aufnahmekörpers aufgebracht und dort verriegelt, beispielsweise aufgeschraubt, insbesondere mittels Bajonettgeometrie auf den Befestigungsabschnitt des Aufnahmekörpers aufgeschraubt.

Die Drucksensoraufnahme muss daher nicht mit dem Tank verschweißt werden. Der Aufbau der Drucksensoraufnahme kann einfach sein. Die Drucksensoraufnahme kann im Wesentlichen ein zylindrisches Bauteil sein. Die Befestigung der Drucksensoraufnahme und die Herstellung des Kraftfahrzeugtanks kann kostengünstig erfolgen.

Der Kraftfahrzeugtank kann ein Metalltank sein. Die Befestigung kann beispielsweise an einem Kraftstofftank oder an einem Betriebsmitteltank oder einem Ausgleichsbehälter oder einer Liquid-Trap oder einem Verbindungsrohr, beispielsweise einem Einfüllrohr, des Kraftfahrzeugtanks erfolgen. Die Öffnung des Kraftfahrzeugtanks kann eine Öffnung in einer Tankwand, Behälterwand oder Rohrwand, insbesondere aus Metall, sein.

Erfindungsgemäß ist der Verriegelungskörper auf den Befestigungsabschnitt des Aufnahmekörpers aufbringbar und am Befestigungsabschnitt verriegelbar mittels eines Bajonettverschlusses.

Der Bajonettverschluss umfasst erfindungsgemäß zumindest zwei axial ansteigende Bajonettführungen im Befestigungsabschnitt des Aufnahmekörpers und zwei zu den Bajonettführungen korrespondierende Riegel im Verriegelungskörper. Alternativ kann umgekehrt der Bajonettverschluss zwei axial ansteigende Bajonettführungen im Verriegelungskörper und zwei zu den Bajonettführungen korrespondierende Riegel im Befestigungsabschnitt des Aufnahmekörpers aufweisen. Durch die axial steigenden Bajonettführungen können der Aufnahmekörper und der Verriegelungskörper gegeneinander verspannt werden, um ein gutes Klemmen am Tank und eine gute Abdichtung, bevorzugt durch ein Dichtelement am Übergang zur Tankwand, zu erreichen.

Erfindungsgemäß ist zwischen dem Befestigungsabschnitt des Aufnahmekörpers und dem Verriegelungskörper ein Mittel gegen das Lösen des Verriegelungskörpers vom Aufnahmekörper eingerichtet, insbesondere ein Ratschenverschluss.

An der ersten Auflagefläche ist vorzugsweise eine umlaufende Dichtung zur Abdichtung gegen den Rand der Öffnung angeordnet, insbesondere eine Formdichtung oder O-Ringdichtung.

Bevorzugt weist ein der ersten Auflagefläche benachbarter axialer Abschnitt des Befestigungsabschnitts des Aufnahmekörpers eine nicht-kreisförmige Form auf, also bevorzugt zumindest eine oder mehrere gerade Kanten. Der der ersten Auflagefläche benachbarte axiale Abschnitt des Befestigungsabschnitts befindet sich dort, wo bei Einbau in den Kraftfahrzeugtank die Tankwand liegt. Bevorzugt ist der in der Öffnung des Kraftfahrzeugtanks aufgenommene Abschnitt des Aufnahmekörpers nicht kreisförmig, ebenso wie der Rand der Öffnung nicht kreisförmig ist. Hierdurch kann eine Verdrehsicherung für die Drucksensoraufnahme hergestellt werden.

Bevorzugt weist der Verriegelungskörper eine Außenkontur in der Form einer Schraubenmutter aufweist, insbesondere einen Sechskant.

Vorzugsweise ist ein Drucksensor an einem dem ersten axialen Ende des Aufnahmekörpers gegenüberliegenden zweiten axialen Ende des Aufnahmekörpers befestigt.

Die Lösung der Aufgabe erfolgt auch durch eine Tankvorrichtung, umfassend eine Drucksensoraufnahme wie zuvor beschrieben und einen Kraftfahrzeugtank, wobei der Befestigungsabschnitt der Drucksensoraufnahme durch eine Öffnung des Kraftfahrzeugtanks, insbesondere durch eine Öffnung einer Tankwand oder einer Behälterwand oder einer Rohrwand des Kraftfahrzeugtanks, gesteckt ist, sodass eine den Befestigungsabschnitt begrenzende erste Auflagefläche des Aufnahmekörpers am Rand der Öffnung anliegt, wobei der Verriegelungskörper auf den Befestigungsabschnitt des Aufnahmekörpers aufgebracht und am Befestigungsabschnitt verriegelt ist, sodass die zweite Auflagefläche des verriegelten Verriegelungskörpers an der gegenüberliegenden Seite des Randes der Öffnung anliegt, so dass die Drucksensoraufnahme durch den Aufnahmekörper einerseits und den Verriegelungskörper andererseits am Rand der Öffnung geklemmt ist.

### Kurzbeschreibung der Zeichnungen

Die Erfindung wird im Folgenden beispielhaft unter Bezugnahme auf die Zeichnungen beschrieben.
- Fig. 1a: ist eine dreidimensionale Darstellung einer erfindungsgemäßen Drucksensoraufnahme in einem Kraftfahrzeugtank von innen.
- Fig. 1b: ist eine dreidimensionale Darstellung der Drucksensoraufnahme gemäß Fig. 1a von außen.
- Fig. 2: ist eine Schnittansicht der Drucksensoraufnahme gemäß Fig. 1a von der Seite.
- Fig. 3: ist eine Schnittansicht der Drucksensoraufnahme gemäß Fig. 2 von innen, in der Ebene der Öffnung des Kraftfahrzeugtanks.
- Fig. 4: ist eine Teildarstellung der Drucksensoraufnahme gemäß Fig. 2 von der Seite, ohne Verriegelungskörper.
- Fig. 5: ist eine Schnittansicht der Drucksensoraufnahme gemäß Fig. 2 von innen, in der Ebene des Ratschenverschlusses.

### Detaillierte Beschreibung der Erfindung

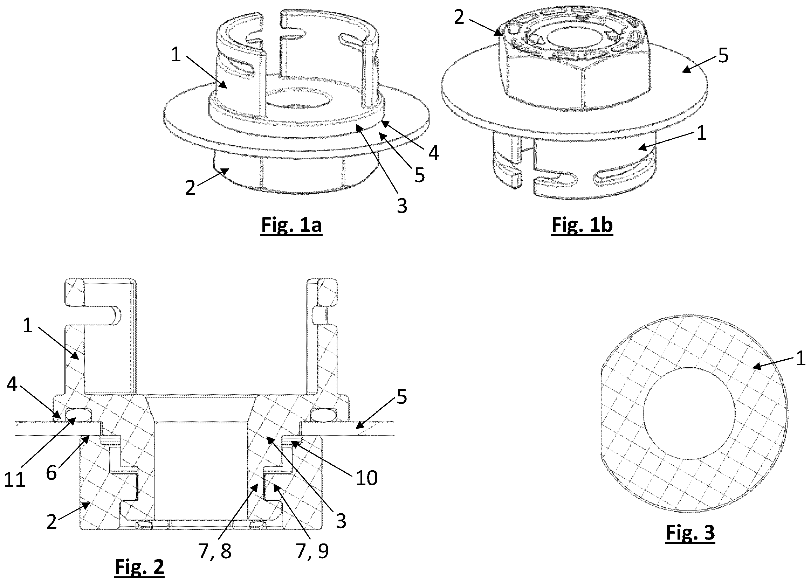

In den Fig. 1a, 1b und 2 ist eine erfindungsgemäße Drucksensoraufnahme in einem Kraftfahrzeugtank dargestellt.

Die Drucksensoraufnahme umfasst einen zylindrischen Aufnahmekörper 1, in welchen der Drucksensor aufgenommen ist und einen Verriegelungskörper 2, als Gegenstück zur Befestigung des Aufnahmekörpers am Kraftfahrzeugtank. Ein erstes axiales Ende des Aufnahmekörpers 1 bildet einen Befestigungsabschnitt des Aufnahmekörpers 1, der durch eine Öffnung 3 einer Tankwand des Kraftfahrzeugtanks gesteckt ist. Von der Tankwand ist lediglich der Rand 5 um die Öffnung 3 dargestellt.

Eine den Befestigungsabschnitt begrenzende erste Auflagefläche 4 des Aufnahmekörpers 1 liegt am Rand 5 der Öffnung 3 an, also an der den Rand um die Öffnung 3 bildenden Tankwand.

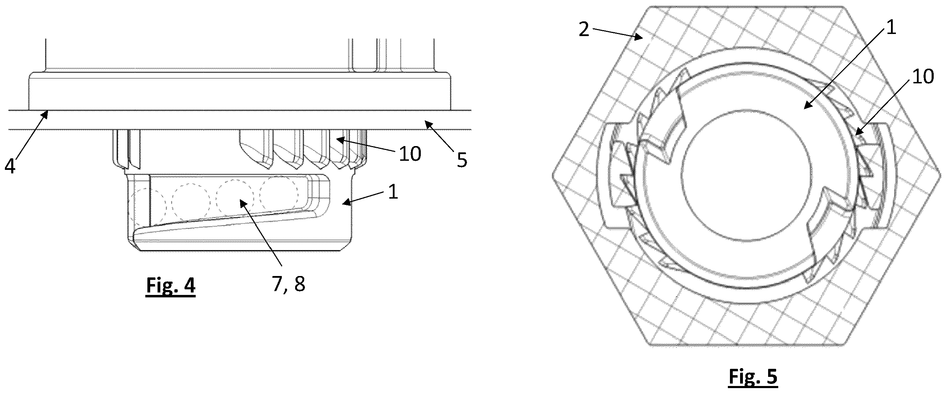

Der Verriegelungskörper 2 ist auf den Befestigungsabschnitt des Aufnahmekörpers 1 aufgebracht und am Befestigungsabschnitt verriegelt, mittels eines in Fig. 4 näher dargestellten Bajonettverschlusses 7. Eine zweite Auflagefläche 6 des Verriegelungskörpers 2 liegt an der gegenüberliegenden Seite des Randes 5 der Öffnung 3 an, so dass die Drucksensoraufnahme durch den Aufnahmekörper 1 einerseits und den Verriegelungskörper 2 andererseits am Rand 5 der Öffnung 3, also an der Tankwand, geklemmt und somit befestigt ist.

An der ersten Auflagefläche 4 ist eine um die Öffnung 3 umlaufende Dichtung 11, zur Abdichtung gegen den Rand 5 der Öffnung 3 angeordnet, insbesondere eine Ringdichtung.

Der Verriegelungskörper 2 weist eine Außenkontur in der Form einer Schraubenmutter auf, insbesondere einen Sechskant, so dass der Verriegelungskörper 2 einfach auf den Aufnahmekörper 1 aufgeschraubt werden kann.

Fig. 3 zeigt, dass ein, der ersten Auflagefläche 4 benachbarter, axialer Abschnitt des Befestigungsabschnitts des Aufnahmekörpers, also der Abschnitt der radial innen an der Öffnung 3 angeordnet ist, eine nicht-kreisförmige Form aufweist. Eine entsprechende Form weist auch die Öffnung 3 auf. Die Drucksensoraufnahme ist somit gegen Verdrehung gesichert.

Wie in Fig. 4 gut erkennbar, umfasst der Bajonettverschluss 7 zumindest zwei axial ansteigende Bajonettführungen 8, also Bajonettgeometrien, im Befestigungsabschnitt des Aufnahmekörpers 1 und zwei zu den Bajonettführungen 8 korrespondierende Riegel 9 im Verriegelungskörper 2 (Fig. 2).

In Fig. 5 ist schließlich dargestellt, dass zwischen dem Befestigungsabschnitt des Aufnahmekörpers 1 und dem Verriegelungskörper 2 ein Mittel gegen das Lösen des Verriegelungskörpers 2 vom Aufnahmekörper 1 eingerichtet ist, nämlich ein Ratschenverschluss 10.

Bei der Herstellung des Kraftfahrzeugtanks kann somit der Aufnahmekörper 1 der Drucksensoraufnahme 1 durch eine passende Öffnung 3 der jeweiligen metallischen Tankkomponente gesteckt und auf der Gegenseite mittels des Verriegelungskörpers 2 nicht lösbar verriegelt werden.

Durch die spezielle Form der Drucksensoraufnahme sowie der Öffnung 3 in der Tankkomponente ist die Verbindung gegen Verdrehen gesichert. Die Abdichtung zwischen Drucksensoraufnahme und Tankkomponente erfolgt durch eine Dichtung 11, insbesondere einen O-Ring bzw. eine Formdichtung.

Die Montage der Drucksensoraufnahme erfolgt mit Hilfe des Verriegelungskörpers 2, welcher über zwei gegenüberliegende Riegel 9 in eine steigende Bajonettgeometrie 8 eingreift und somit die Schnittstelle Drucksensoraufnahme bzw. Aufnahmekörper 1 - Dichtung 11 - Tanckomponente (dargestellt als Rand 5) verspannt und abdichtet. Aufgrund der steigenden Bajonettgeometrie 8 kann die erfindungsgemäße Lösung bei verschiedenen Wandstärken der Tankkomponente eingesetzt werden.

Durch einen radial angebrachten Ratschenverschluss 10 ist der Verriegelungskörper 2 gegen das Lösen der Verbindung gesichert. Somit ist ein Sich-lösen der Verbindung während des Betriebs, z.B. durch Vibrationen während des Fahrens, nicht möglich und die Dichtheit des Systems gesichert.

Anstelle von Schweißen bzw. Löten wird die beschriebene Drucksensoraufnahme mittels einer nicht lösbaren Bajonettverbindung bzw. Bajonettverschlusses montiert.

### Bezugszeichenliste

- 1: Aufnahmekörper
- 2: Verriegelungskörper
- 3: Öffnung
- 4: erste Auflagefläche
- 5: Rand
- 6: zweite Auflagefläche
- 7: Bajonettverschluss
- 8: Bajonettführung
- 9: Riegel
- 10: Ratschenverschluss
- 11: Dichtung

## Patentansprüche

1. Drucksensoraufnahme, zur Befestigung eines Drucksensors an einem Kraftfahrzeugtank, umfassend einen zylindrischen Aufnahmekörper (1) und einen Verriegelungskörper (2), wobei ein erstes axiales Ende des Aufnahmekörpers (1) einen Befestigungsabschnitt des Aufnahmekörpers (1) bildet, wobei der Befestigungsabschnitt dazu ausgebildet ist, durch eine Öffnung (3) des Kraftfahrzeugtanks gesteckt zu werden, bis eine den Befestigungsabschnitt begrenzende erste Auflagefläche (4) des Aufnahmekörpers (1) am Rand (5) der Öffnung (3) anliegt, wobei der Verriegelungskörper (2) auf den Befestigungsabschnitt des Aufnahmekörpers (1) aufbringbar und am Befestigungsabschnitt verriegelbar ist, sodass eine zweite Auflagefläche (6) des verriegelten Verriegelungskörpers (2) an der gegenüberliegenden Seite des Randes (5) der Öffnung (3) anliegt, so dass die Drucksensoraufnahme durch den Aufnahmekörper (1) einerseits und den Verriegelungskörper (2) andererseits am Rand (5) der Öffnung (3) geklemmt ist, **dadurch gekennzeichnet, dass** der Verriegelungskörper (2) auf den Befestigungsabschnitt des Aufnahmekörpers (1) mittels eines Bajonettverschlusses (7) aufbringbar und am Befestigungsabschnitt verriegelbar ist, wobei der Bajonettverschluss (7) zumindest zwei axial ansteigende Bajonettführungen (8) im Befestigungsabschnitt des Aufnahmekörpers (1) und zwei zu den Bajonettführungen (8) korrespondierende Riegel (9) im Verriegelungskörper (2) umfasst, oder umgekehrt, wobei zwischen dem Befestigungsabschnitt des Aufnahmekörpers (1) und dem Verriegelungskörper (2) ein Mittel gegen das Lösen des Verriegelungskörpers (2) vom Aufnahmekörper (1) eingerichtet ist.

2. Drucksensoraufnahme nach Anspruch 1,
**dadurch gekennzeichnet, dass** zwischen dem Befestigungsabschnitt des Aufnahmekörpers (1) und dem Verriegelungskörper (2) ein Mittel gegen das Lösen des Verriegelungskörpers (2) vom Aufnahmekörper (1) eingerichtet ist, nämlich ein Ratschenverschluss (10).

3. Drucksensoraufnahme nach zumindest einem der vorhergehenden Ansprüche,
**dadurch gekennzeichnet, dass** an der ersten Auflagefläche (4) eine umlaufende Dichtung (11) zur Abdichtung gegen den Rand (5) der Öffnung (3) angeordnet ist.

4. Drucksensoraufnahme nach zumindest einem der vorhergehenden Ansprüche,
**dadurch gekennzeichnet, dass** ein, der ersten Auflagefläche (4) benachbarter, axialer Abschnitt des Befestigungsabschnitts des Aufnahmekörpers eine nicht-kreisförmige Form aufweist.

5. Drucksensoraufnahme nach zumindest einem der vorhergehenden Ansprüche,
**dadurch gekennzeichnet, dass** der Verriegelungskörper (2) eine Außenkontur in der Form einer Schraubenmutter aufweist, insbesondere einen Sechskant.

6. Drucksensoraufnahme nach zumindest einem der vorhergehenden Ansprüche,
**dadurch gekennzeichnet, dass** ein Drucksensor an einem dem ersten axialen Ende des Aufnahmekörpers (1) gegenüberliegenden zweiten axialen Ende des Aufnahmekörpers (1) befestigt ist.

7. Tankvorrichtung, umfassend eine Drucksensoraufnahme nach zumindest einem der vorhergehenden Ansprüche und einen Kraftfahrzeugtank,
**dadurch gekennzeichnet, dass** der Befestigungsabschnitt der Drucksensoraufnahme durch eine Öffnung (3) des Kraftfahrzeugtanks, insbesondere durch eine Öffnung (3) einer Tankwand, einer Behälterwand oder einer Rohrwand des Kraftfahrzeugtanks, gesteckt ist, sodass eine den Befestigungsabschnitt begrenzende erste Auflagefläche (4) des Aufnahmekörpers (1) am Rand (5) der Öffnung (3) anliegt, wobei der Verriegelungskörper (2) auf den Befestigungsabschnitt des Aufnahmekörpers (1) aufgebracht und am Befestigungsabschnitt verriegelt ist, sodass die zweite Auflagefläche (6) des verriegelten Verriegelungskörpers (2) an der gegenüberliegenden Seite des Randes (5) der Öffnung (3) anliegt, so dass die Drucksensoraufnahme durch den Aufnahmekörper (1) einerseits und den Verriegelungskörper (2) andererseits am Rand (5) der Öffnung (3) geklemmt ist.

## Claims

1. Pressure sensor receptacle for the fastening of a pressure sensor to a motor vehicle tank, comprising a cylindrical receptacle body (1) and a locking body (2), wherein a first axial end of the receptacle body (1) forms a fastening portion of the receptacle body (1), wherein the fastening portion is configured for being plugged through an opening (3) of the motor vehicle tank until a first bearing surface (4), bounding the fastening portion, of the receptacle body (1) bears against the edge (5) of the opening (3), wherein the locking body (2) can be mounted onto the fastening portion of the receptacle body (1) and can be locked to the fastening portion such that a second bearing surface (6) of the locked locking body (2) bears against the opposite side of the edge (5) of the opening (3), with the result that the pressure sensor receptacle is clamped to the edge (5) of the opening (3) by the receptacle body (1) at one side and by the locking body (2) at the other side
**characterized in that** the locking body (2) can be mounted onto the fastening portion of the receptacle body (1) by means of a bayonet fastener (7) and can be locked to the fastening portion, wherein
the bayonet fastener (7) comprises at least two axially rising bayonet guides (8) in the fastening portion of the receptacle body (1) and two bars (9) corresponding to the bayonet guides (8) in the locking body (2), or vice versa, wherein between the fastening portion of the receptacle body (1) and the locking body (2), there is configured a means for countering the detachment of the locking body (2) from the receptacle body (1).

2. Pressure sensor receptacle according to Claim 1, **characterized in that,** between the fastening portion of the receptacle body (1) and the locking body (2), there is configured a means for countering the detachment of the locking body (2) from the receptacle body (1), namely a ratchet fastener (10).

3. Pressure sensor receptacle according to at least one of the preceding claims,
**characterized in that**, at the first bearing surface (4), there is arranged an encircling seal (11) for sealing with respect to the edge (5) of the opening (3).

4. Pressure sensor receptacle according to at least one of the preceding claims,
**characterized in that** an axial portion of the fastening portion of the receptacle body that is adjacent to the first bearing surface (4) has a non-circular shape.

5. Pressure sensor receptacle according to at least one of the preceding claims,
**characterized in that** the locking body (2) has an outer contour in the shape of a nut, in particular a hexagon.

6. Pressure sensor receptacle according to at least one of the preceding claims,
**characterized in that** a pressure sensor is fastened to a second axial end of the receptacle body (1), which second axial end is situated opposite the first axial end of the receptacle body (1).

7. Tank device, comprising a pressure sensor receptacle according to at least one of the preceding claims and a motor vehicle tank, **characterized in that** the fastening portion of the pressure sensor receptacle is plugged through an opening (3) of the motor vehicle tank, in particular through an opening (3) of a tank wall, a vessel wall or a tube wall of the motor vehicle tank, such that a first bearing surface (4), bounding the fastening portion, of the receptacle body (1) bears against the edge (5) of the opening (3), wherein the locking body (2) is mounted onto the fastening portion of the receptacle body (1) and locked to the fastening portion such that the second bearing surface (6) of the locked locking body (2) bears against the opposite side of the edge (5) of the opening (3), with the result that the pressure sensor receptacle is clamped to the edge (5) of the opening (3) by the receptacle body (1) at one side and by the locking body (2) at the other side.

## Revendications

1. Logement de capteur de pression, servant à la fixation d'un capteur de pression à un réservoir de véhicule automobile, comprenant un corps de logement cylindrique (1) et un corps de verrouillage (2), dans lequel une première extrémité axiale du corps de logement (1) forme une section de fixation du corps de logement (1), dans lequel la section de fixation est réalisée pour être enfichée à travers une ouverture (3) du réservoir de véhicule automobile jusqu'à ce qu'une première surface portante (4) du corps de logement (1) délimitant la section de fixation bute contre le bord (5) de l'ouverture (3), dans lequel le corps de verrouillage (2) peut être amené sur la section de fixation du corps de logement (1) et peut être verrouillé au niveau de la section de fixation, de sorte qu'une deuxième surface portante (6) du corps de verrouillage (2) verrouillé bute contre le côté opposé du bord (5) de l'ouverture (3), de sorte que le logement de capteur de pression soit coincé par le corps de logement (1) d'une part et par le corps de verrouillage (2) d'autre part au niveau du bord (5) de l'ouverture (3), **caractérisé en ce que** le corps de verrouillage (2) peut être amené sur la section de fixation du corps de logement (1) à l'aide d'une serrure à baïonnette (7) et peut être verrouillé au niveau de la section de fixation, dans lequel la serrure à baïonnette (7) comprend au moins deux guides de baïonnette (8) montants dans le plan axial dans la section de fixation du corps de logement (1) et deux verrous (9) correspondant aux guides de baïonnette (8) dans le corps de verrouillage (2), ou inversement, dans lequel un moyen est prévu entre la section de fixation du corps de logement (1) et le corps de verrouillage (2) de façon à permettre le desserrage du corps de verrouillage (2) par rapport au corps de logement (1).

2. Logement de capteur de pression selon la revendication 1, **caractérisé en ce qu'**un moyen est prévu contre le desserrage du corps de verrouillage (2) par rapport au corps de logement (1) entre la section de fixation du corps de logement (1) et le corps de verrouillage (2), notamment une serrure à cliquet (10).

3. Logement de capteur de pression selon au moins l'une quelconque des revendications précédentes, **caractérisé en ce qu'**un joint périphérique (11) est disposé au niveau de la première surface portante (4) pour réaliser l'étanchéité contre le bord (5) de l'ouverture (3).

4. Logement de capteur de pression selon au moins l'une quelconque des revendications précédentes, **caractérisé en ce qu'**une section axiale de la section de fixation du corps de logement connexe à la première surface portante (4) présente une forme non circulaire.

5. Logement de capteur de pression selon au moins l'une quelconque des revendications précédentes, **caractérisé en ce que** le corps de verrouillage (2) présente un contour extérieur sous la forme d'un écrou vissé, notamment d'un six pans.

6. Logement de capteur de pression selon au moins l'une quelconque des revendications précédentes, **caractérisé en ce qu'**un capteur de pression est fixé à une deuxième extrémité axiale du corps de logement (1) opposée à la première extrémité axiale du corps de logement (1).

7. Dispositif à réservoir, comprenant un logement de capteur de pression selon au moins l'une quelconque des revendications précédentes et un réservoir de véhicule automobile, **caractérisé en ce que** la section de fixation du logement de capteur de pression est enfichée au travers d'une ouverture (3) du réservoir de véhicule automobile, notamment au travers d'une ouverture (3) d'une paroi de réservoir, d'une paroi de récipient ou d'une paroi tubulaire du réservoir de véhicule automobile, de sorte qu'une première surface portante (4) du corps de logement (1) délimitant la section de fixation bute contre le bord (5) de l'ouverture (3), dans lequel le corps de verrouillage (2) est appliqué sur la section de fixation du corps de logement (1) et est verrouillé au niveau de la section de fixation, de sorte que la deuxième surface portante (6) du corps de verrouillage (2) verrouillé bute contre le côté opposé du bord (5) de l'ouverture (3), de sorte que le logement de capteur de pression soit coincé par le corps de logement (1) d'une part et par le corps de verrouillage (2) d'autre part au niveau du bord (5) de l'ouverture (3).
